# EUROPEAN PATENT APPLICATION

(11) **EP 3 334 104 A1**
(43) Date of publication of application: **13.06.2018**
(21) Application number: 16290228.2
(22) Date of filing: 08.12.2016
(51) Int. Cl.: H04L 12/833, H04L 12/26, H04L 12/823

(54) **A NETWORK ELEMENT AND PACKET FORWARDING NETWORK ELEMENT WITH TRAFFIC MIRRORING FUNCTION, AND CORRESPONDING METHOD**

(71) Applicant: Alcatel Lucent, 91620 Nozay (FR)
(72) Inventor: Cautereels, Paul Henri Marie, 2018 Antwerpen (BE); Perez Caparros, David, 2018 Antwerpen (BE); Vandeputte, Frederik, 2018 Antwerpen (BE)
(74) Representative: IP HILLS NV

(57) **Abstract**

A network element (101; 201; 611) of a data packet network (100) comprises a traffic mirroring filter (112) configured to filter data packets and to forward data packets that match the traffic mirroring filter (112) to an analysing network element (103; 621). The network element (101; 201; 611) further comprises a data packet tagging module (113) to tag a data packet that matches the traffic mirroring filter (112) with a mirroring tag and to forward that data packet without duplication to thereby postpone duplication of that data packet to a packet forwarding network element (615) located at a point in the network where a trajectory of that data packet to its destination (102; 603) and a trajectory of that data packet to the analysing network element (103; 621) diverge.

## Description

### Technical Field

The present invention generally relates to traffic mirroring in a data network, i.e. the duplication of data packets and the transfer of duplicates of data packets to an analysing network element central in the data network, typically for inspection or monitoring purposes.

### Background

Most data networks allow that nodes send copies of part of the data packet traffic to a central node or element for further analysis. Further analysis central in the network is done for inspection or monitoring purposes like for instance anomaly detection or the detection of security issues in general. This phenomenon, known as traffic mirroring, is gaining attractiveness as security issues in data networks are becoming more and more important.

Traditionally, traffic mirroring is implemented by installing a traffic mirroring filter in nodes of the data network. All or part of the data packets that match the traffic mirroring filter are duplicated. The original data packet is forwarded along the normal trajectory to its destination whereas a duplicate or copy of the data packet is sent to the central analysis element. Usually, the traffic mirroring filter is installed by the operator of the data network at the edge of the data network, i.e. in ingress nodes of the data network, because data traffic that must be analysed can most easily be identified there. The traffic mirroring filter may for instance filter all data traffic entering the network via a certain port, all data traffic originating from a specific device or a specific type of device, etc.

### Summary

A disadvantage of known implementations of traffic mirroring is that both data packets, the original data packet and its duplicate, need to travel the data network to their respective destinations. Traffic mirroring hence generates substantial additional traffic in the data network consuming excessive resources, i.e. bandwidth on the links and processing power in the network nodes on the trajectories towards the real destination of the data packet as well as towards the central analysing network element.

It is an objective of embodiments of the present invention to disclose a more efficient technique to implement traffic mirroring, with reduced bandwidth and resource consumption in the data network.

Embodiments of the invention concern a network element of a data packet network as defined by claim 1, the network element comprising:
- a traffic mirroring filter configured to filter data packets and to forward data packets that match the traffic mirroring filter to an analysing network element; and
- a data packet tagging module adapted to tag a data packet that matches the traffic mirroring filter with a mirroring tag and to forward the data packet without duplication to thereby postpone duplication of the data packet to a packet forwarding network element located at a point in the network where a trajectory of the data packet to its destination and a trajectory of the data packet to the analysing network element diverge.

Thus, in line with embodiments of the invention, data packets that match the traffic mirroring filter are no longer duplicated at the ingress node of the data network or at the network node that implements the traffic mirroring filter. At the ingress node (or alternatively at a further node in the network that comprises the traffic mirroring filter), such data packets are only tagged for later identification. The tagged version of the data packet thereupon is forwarded to its destination. Each network node on the trajectory to the packet's destination can then check for such tagged packets and duplicate such tagged data packets only when the further trajectory to the data packet's destination diverges from the further trajectory to the central analysing node. The additional traffic generated in the data network through traffic mirroring this way is minimized.

In embodiments of the network element according to the present invention defined by claim 2, the mirroring,tag comprises one or more of:
- a Virtual Local Area Network tag or VLAN tag;
- manipulated Ethernet Type of Service bits or TOS bits;
- a manipulated Internet Protocol Differentiated Services Code Point value or IP DSCP value; and/or
- a dedicated packet header.

Indeed, although not limited thereto, the tag identifying that a data packet matches the traffic mirroring filter may be a VLAN tag, specific TOS bits, a specific DSCP value, a specific packet header or even a combination thereof. The specific packet header may optionally contain additional information like for instance an ingress port, a switch identifier, etc.

Embodiments of the invention also concern a packet forwarding network element as defined by claim 3, adapted to receive and forward data packets in a data packet network, the packet forwarding network element comprising:
- a mirroring tag recognition module adapted to recognize a mirroring tag in a received data packet, the mirroring tag indicating that a copy of the data packet must be forwarded to an analysing network element; and
- a packet forwarding module adapted to forward the data packet with mirroring tag once if an output port of the packet forwarding network element towards a destination of the data packet is identical to an output port of the packet forwarding network element towards the analysing network element.

Indeed, in line with embodiments of the present invention, packet forwarding network nodes such as routers or switches are enabled to recognize presence of a mirroring tag in received data packets. The packet forwarding nodes will not duplicate a tagged data packet but forward the tagged version of the data packet to its destination as long as the output port towards that destination corresponds to the output port towards the central analysing node. Thus, if both output ports are the same, the tagged version of the data packet will be forwarded only once via that interface. This way, it is further guaranteed that additional traffic generated as a result of traffic mirroring is minimized.

In embodiments of the packet forwarding network element according the present invention, defined by claim 4, the packet forwarding module is further adapted to remove the mirroring tag from the data packet if the output port of the packet forwarding network element towards the destination is different from the output port of the packet forwarding network element towards the analysing network element, to duplicate the data packet and forward a duplicate towards the analysing network element, and to forward the data packet towards the destination in absence of any drop decision.

Thus, in the alternative scenario where a packet forwarding node receives a tagged data packet and establishes that the trajectory towards the data packet's destination and the trajectory towards the central analysing node diverge, i.e. when the output ports towards the packet's destination and the central analysing node are not the same, the packet will be duplicated and forwarded along the two diverging trajectories. Before duplicating and forwarding such packet, the mirroring tag is removed such that further nodes along the trajectory towards the destination or along the trajectory towards the central analysing node no longer consider the data packet as a packet that may have to be duplicated. Hence, the original data packet, after removal of the tag, will continue to travel towards its original destination, and a duplicate or copy of the untagged packet will travel through the data network towards the central analysing node. The actual packet duplication this way is postponed to the point in the data network where the two trajectories diverge, thereby minimising the bandwidth consumption for traffic mirroring in the network.

It is noticed that the tagged data packet, the untagged data packet and/or the duplicate of the untagged data packet may be encapsulated by ingress nodes or packet forwarding nodes before being sent out, as is defined by claim 5. The optional encapsulation of one or both data packets after duplication could for instance be tunnel encapsulation.

It is further also noticed that the untagged data packet is forwarded by a packet forwarding node only when there is no local packet drop decision.

In embodiments of the packet forwarding network element according to the present invention, defined by claim 6, the packet forwarding module is further adapted to drop the data packet without forwarding the data packet towards the destination in case of a drop decision.

Indeed, should the packet forwarding node decide to drop a received, tagged data packet, e.g. as a result of some filtering operation, the untagged data packet will not be sent out to its normal destination, but a copy of the untagged data packet will still be sent to the central analysing node for further analysis.

Embodiments of the invention also concern a corresponding method for traffic mirroring applied at a network element, as defined by claim 7, the method comprising:
- filtering data packets that match a traffic mirroring filter at the network element;
- tagging a data packet that matches the traffic mirroring filter with a mirroring tag;
   and
- forwarding the data packet without duplication to thereby postpone duplication of the data packet to a packet forwarding network element located at a point in the network where a trajectory of the data packet to its destination and a trajectory of the data packet to the analysing network element diverge.

Embodiments of the invention further also concern a method for traffic mirroring at a packet forwarding network element, as defined by claim 8, the method comprising:
- recognizing a mirroring tag in a received data packet, the mirroring tag indicating that a copy of the data packet must be forwarded to an analysing network element; and
- forwarding the data packet with mirroring tag once if an output port of the packet forwarding network element towards a destination of the data packet is identical to an output port of the packet forwarding network element towards the analysing network element; or
- removing the mirroring tag from the data packet if the output port of the packet forwarding network element towards the destination is different from the output port of the packet forwarding network element towards the analysing network element, to duplicate the data packet and forward a duplicate towards the analysing network element, and to forward the data packet towards the destination in absence of any drop decision.

### Brief Description of the Drawings

Fig. 1 shows a network comprising an embodiment of the network element 101 according to the present invention;
Fig. 2 shows the functional blocks of an embodiment of the packet forwarding network element 201 according to the present invention;
Fig. 3 is a functional block scheme showing the packet forward engine 213 in the packet forwarding network element 201 of Fig. 2 in more detail;
Fig. 4 represents a flow diagram illustrating an embodiment of the method for traffic mirroring according to the present invention;
Fig. 5 illustrates traffic mirroring in a particular network in accordance with the prior art;
Fig. 6 illustrates traffic mirroring in the network of Fig. 5 in accordance with an embodiment of the present invention; and
Fig. 7 illustrates a computing system 700 suitable for implementing embodiments of the method for traffic mirroring according to the present invention.

### Detailed Description of Embodiment(s)

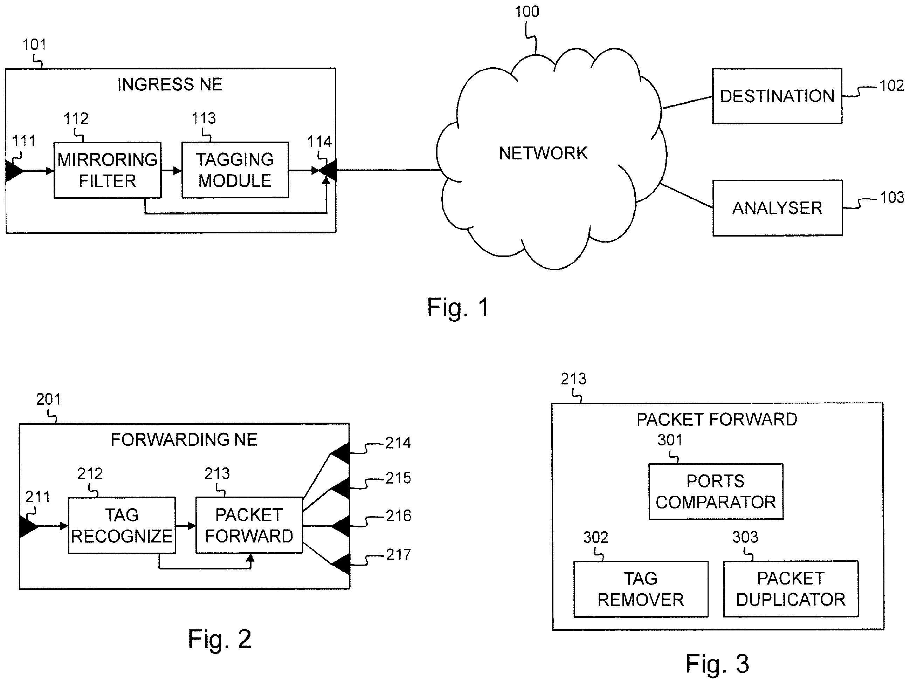

Fig. 1 shows a communication network 100 comprising an ingress network element denoted INGRESS NE or 101, a destination node denoted DESTINATION or 102 and an analysing network element denoted ANALYSER or 103. The network 100 obviously comprises plural other network elements, for instance packet forwarding network elements like the one drawn in Fig. 2 and denoted FORWARDING NE or 201 there. The ingress network element 101 drawn in Fig. 1 comprises an input port 111, a traffic mirroring filter 112, a tagging module 113 and an output port 114. The forwarding network element 201 drawn in Fig. 2 comprises an input port 211, a mirroring tag recognizer 212, a packet forwarding engine 213, and a number of output ports 214, 215, 216 and 217. Fig. 3 shows that the packet forwarding engine 213 of the packet forwarding network element 201 comprises a ports comparator 301, a tag remover 302 and a packet duplicator 303. The operation of these functional blocks that form part of the ingress network element 101 and packet forwarding network element 201 will be described in detail in the following paragraphs.

For inspecting or monitoring purposes, part of the data traffic entering the network 100 is sent to the analyser 103, a network element central in the network 100 that analyses data traffic travelling through the network 100. The analyser 103 for instance detects anomalies or detects security issues in general. The location of the analyser 103 may be unknown or may vary over time, and must consequently not be "physically central" in the network 100. The central aspect of the analyser 103 lies in the fact that this analyser 103 can monitor and analyse all traffic travelling through the network 100, irrespective of the origin and/or destination of the traffic.

In order to decide which data traffic is sent for analysis to the analyser 103, the operator of network 100 installs traffic mirroring filters in certain network elements. The traffic mirroring filters are preferably installed at the edge of the network 100 because the traffic that is desirably analysed can most easily be identified there. Mirroring filter 112 in ingress network element 101 is such a filter installed by the operator of network 100 in a node 101 at the edge of the network. All data traffic entering ingress network element 101 and matching the mirroring filter 112 must be sent to the analyser 103 for further analysis. The mirroring filter 112 for instance specifies that traffic entering via port 111 must be analysed, or that traffic from a specifc type of device entering via port 111 must be analysed, etc.

A data packet received at ingress node 101, not matching the mirroring filter 112, is sent into network 100 via output port 114 towards its destination. A data packet received at ingress node 101, matching the mirroring filter 112 however is passed onto the tagging module 113 which adds a mirroring tag to the data packet before sending the data packet into network 100 via output port 114 towards its destination 102. The tag can be an additional VLAN tag, a manipulation of Ethernet Type of Service (TOS) bits, a manipulated IP DSCP value, a dedicated packet header that is added to the data packet matching the mirroring filter 112, or any other type of indication added to or inserted in the data packet and enabling other network elements in network 100 along the path to its destination 102 to recognize that the data packet is marked or tagged for being analysed by analyser 103. The dedicated header or other type of mirroring tag may contain additional useful information such as an identification of the ingress port 111 at which the packet was received by the ingress network element 101, a switch identification, etc. Summarizing, irrespective of whether a received data packet matches the mirroring filter 112 or not, the data packet will be sent only once into the network 100 by the ingress network element 114. In case the data packet must be sent to the central analyser 103 for further analysis, no copy or duplicate of the data packet will be created and sent to the analyser 103, but such data packet will be tagged or marked with a mirroring tag before being sent to its destination 102 at the ingress of the network.

In addition to installing the traffic mirroring filter 112 and tagging function 113 in ingress network element 101, the operator of network 100 also installs a tag recognition module 212 and a specific packet forwarding module 213 in each packet forwarding network element 201. Such packet forwarding network element might for instance be an Internet Protocol (IP) router. The tag recognition module 212 scans packets received at input port 211 for the presence of a traffic mirroring tag as described here above. In case a data packet is received that has no traffic mirroring tag, such data packet will be forwarded according to traditional packet forwarding techniques to its destination. Traditional packet forwarding techniques for instance comprise IP routing, Ethernet switching, ATM switching, etc. In case a data packet is received that has a traffic mirroring tag, the tag recognition module 213 will hand over the packet to the packet forward module 213 and inform the packet forward module 213 that this data packet is subject to traffic mirroring and therefore must reach both its destination 102 and the central analyser 103. The packet forward module 213 identifies via which output port the data packet can reach its destination 102. The packet forward module 213 also identifies via which output port the data packet can reach the analyser 103. This may be done through traditional address table lookup techniques. Thereupon, the ports comparator 301 in packet forward module 213 compares the output port on the data packet's trajectory to its destination 102 with the output port on the data packet's trajectory to the analyser 103. When these two output ports are identical, for example when both the destination 102 and the analyser 103 can be reached through output port 216 of the packet forwarding network element 201, the packet forwarder sends the data packet with mirroring tag via output port 216 towards its destination 102. The received data packet with mirroring tag in other words is left unmodified. No copies or duplicates of the data packet are generated, and the received data packet itself is forwarded along the trajectory towards its destination 102. In case the ports comparator 301 detects that the output port towards the data packet's destination 102 differs from the output port towards the central analyser 103, for example when output port 215 must be used to forward the data packet to destination 102 and output port 217 must be used to forward the data packet to analyser 103, the tag removing module 302 will remove the mirroring tag from the received data packet. Thereafter, the data packet without mirroring tag will be duplicated by the packet duplicator 303. At last, the data packet without mirroring tag will be sent via output port 215 towards its destination 102 whereas a copy of the data packet, also without mirroring tag, will be sent via output port 217 towards the central analyser 103. As a consequence, a data packet with mirroring tag will not be duplicated as long as the trajectory towards the destination and the trajectory towards the central analyser coincide. As soon as the trajectory towards the destination and the trajectory towards the central analyser diverge, the data packet will be duplicated and the mirroring tag will be removed to reduce the overhead in the network and to avoid that further copies are made in packet forwarding nodes further along the trajectory towards the destination.

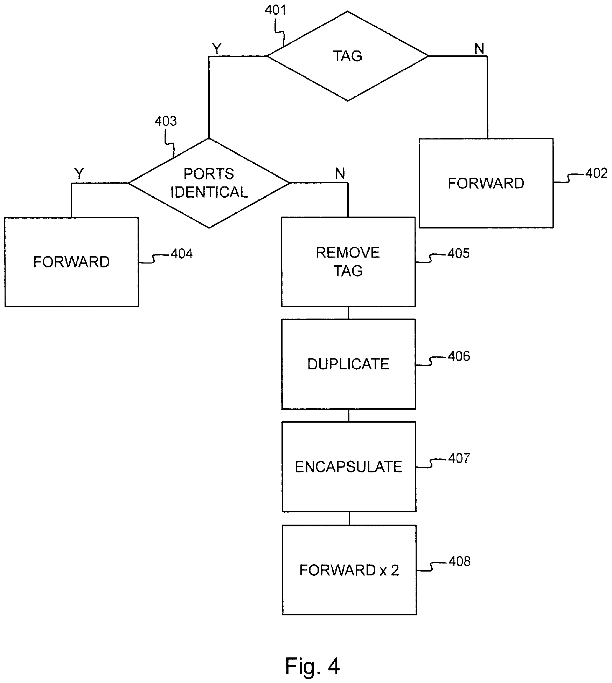

Fig. 4 illustrates the steps that are executed at a packet forwarding network element like 201. These steps jointly constitute an embodiment of the method for traffic mirroring according to the present invention. In a first step 401, it is verified if the received packet contains a mirroring tag. If this is not the case, the received packet must not be sent to the analyser. In step 402, the data packet consequently will be forwarded the traditional way towards its destination. If on the other hand the received packet contains a mirroring tag, step 403 verifies if the output port towards the destination of the packet and the output port towards the central analyser are identical. If these two ports are identical, the data packet with mirroring tag is forwarded towards its destination in step 404. In the situation where these two ports differ, the mirroring tag is removed from the data packet in step 405, the data packet is duplicated in step 406, the data packet and/or its duplicate is/are optionally encapsulated in step 407, e.g. tunnel encapsulation, and the data packet is forwarded towards its destination whereas its duplicate is forwarded towards the central analyser in step 408. It is noticed that in an alternative embodiment where the communication network is controlled by a central SDN controller, the need for comparing ports in step 403 and the need for a ports comparator 301 in Fig. 3 may vanish as the central SDN controller would have a view on the topology of the network and not explicitly have to compare output ports.

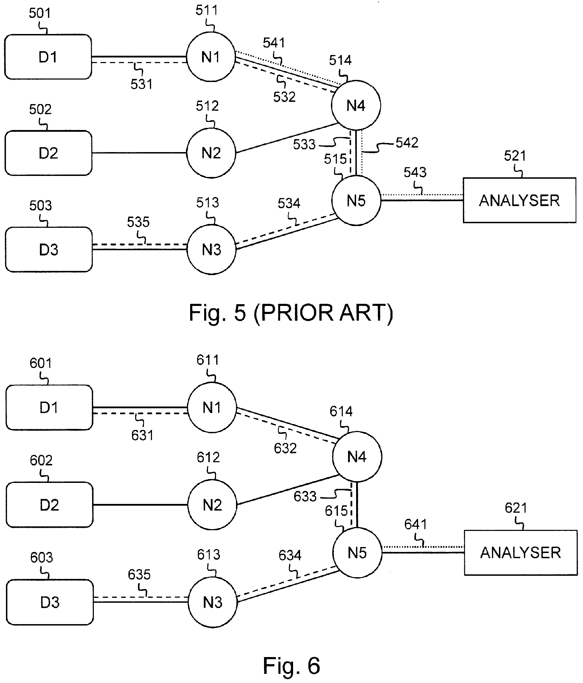

The benefit of the present invention is illustrated by Fig. 5 and Fig. 6. These figures show networks with an identical architecture. Node N1 or 511 is connected to node N4 or 514; node N2 or 512 is also connected to node N4 or 514; node N3 or 513 is connected to node N5 or 515: node N4 or 514 is connected to node N5 or 515; the latter node N5 or 515 connects with the central analyser 521. Further, Fig. 5 shows that a first device D1 or 501 is connected to node N1 or 511. N1 consequently serves as an ingress node to device D1. A second device D2 or 502 is connected to node N2 or 512. N2 consequently serves as an ingress node to device D2. A third device D3 or 503 is connected to node N3 or 513. N3 consequently serves as an ingress node to device D3. Each of the nodes N1-N5 further also has data packet forwarding functionality and consequently serves as a packet forwarding network element.

In Fig. 5, it is assumed that device D1 sends a data packet towards destination device D3. This data packet satisfes the traffic mirroring filter installed at ingress node N1 and therefore also must reach the analyser 521. As is indicated by the dashed line 531-532-533-534-535, the data packet follows a trajectory from device D1 up to destination D3 along the network nodes N1, N4, N5 and N3. At node N1, it is detected that the data packet satisfies the mirroring filter. In line with existing technology, the data packet will be duplicated at node N1 and the duplicate will be sent to the analyser 521. This duplicate follows the dotted trajectory 541-542-543 to travel from the node N1 along the nodes N4 and N5 up to the analyser 521. As can be seen from Fig. 5, the same data packet is sent twice over the link between N1 and N4, and the link between N4 and N5, having a negative impact on the bandwidth consumption on these links.

In Fig. 6, node N1 or 611 is connected to node N4 or 614; node N2 or 612 is also connected to node N4 or 614; node N3 or 613 is connected to node N5 or 615: node N4 or 614 is connected to node N5 or 615; the latter node N5 or 615 connects with the central analyser 621. Further, Fig. 6 shows that a first device D1 or 601 is connected to node N1 or 611. N1 consequently serves as an ingress node to device D1. A second device D2 or 602 is connected to node N2 or 612. N2 consequently serves as an ingress node to device D2. A third device D3 or 603 is connected to node N3 or 613. N3 consequently serves as an ingress node to device D3. Each of the nodes N1-N5 further also has data packet forwarding functionality and consequently serves as a packet forwarding network element. In practice, although described separately here above, the functionality of the ingress network element and the functionality of the packet forwarding network element may reside in a single box or node, generally named network elements. It is further also noticed that packet forwarding network elements just like ingress network elements may comprise a traffic mirroring filter to identify traffic that will be sent to the central analyser, but then probably more at an aggregate level where for instance a sample or fraction of the traffic that matches the filter is sent to the central analyser for high level statistics that provide a view on what traffic is passing through the network. It is also remarked that although the network elements are described here above as nodes and devices, the present invention is also applicable in virtualized environments wherein each of the network elements corresponds to a virtual instance or virtual machine in a cloud environment. The nodes and devices in other words must not be interpreted restrictively to represent physical devices. Although the architecture of the networks drawn in Fig. 5 and Fig. 6 is identical, these networks operate entirely different with respect to traffic mirroring. The reason is that the operator of the network drawn in Fig. 6 has installed traffic mirroring filters and mirroring tag modules that operate according to the present invention in ingress nodes N1, N2 and N3. The operator further has installed mirroring tag recognition modules and packet forwarding engines that operate according to the present invention in nodes N1-N5.

In Fig. 6, it is again assumed that device D1 sends a data packet towards destination device D3. This data packet satisfies the traffic mirroring filter installed at ingress node N1 and therefore also must reach the analyser 621. As is indicated by the dashed line 631-632-633-634-635, the data packet follows a trajectory from device D1 up to destination D3 along the network nodes N1, N4, N5 and N3. At node N1, it is established that the data packet matches the mirroring filter. The data packet becomes tagged with a mirroring tag. At node N5, the above described trajectory towards the destination D3 diverges from the trajectory towards the analyser 621. At node N5, the data packet will therefore be duplicated, the mirroring tag is removed from the data packet and the duplicate is sent to the analyser 621 as is indicated by the dotted line 641. The data packet is sent only once over the link between N1 and N4, and the link between N4 and N5, hence increasing the efficiency of traffic mirroring as the bandwidth consumption in the network is reduced substantially.

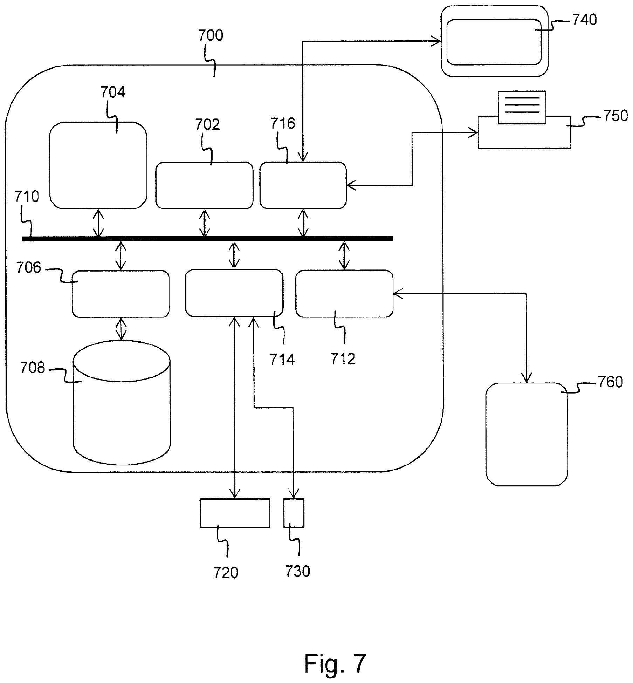

Fig. 7 shows a suitable computing system 700 for implementing the traffic mirroring method according to the present invention, an embodiment of which is illustrated by Fig. 4. Computing system 700 may in general be formed as a suitable general purpose computer and comprise a bus 710, a processor 702, a local memory 704, one or more optional input interfaces 714, one or more optional output interfaces 716, a communication interface 712, a storage element interface 706 and one or more storage elements 708. Bus 710 may comprise one or more conductors that permit communication among the components of the computing system. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator to input information to the computing device 700, such as a keyboard 720, a mouse 730, a pen, voice recognition and/or biometric mechanisms, etc. Output interface 716. may comprise one or more conventional mechanisms that output information to the operator, such as a display 740, a printer 750, a speaker, etc. Communication interface 712 may comprise any transceiver-like mechanism such as for example two 1 Gb Ethernet interfaces that enables computing system 700 to communicate with other devices and/or systems, for example mechanisms for communicating with one or more other computing systems. The communication interface 712 of computing system 700 may be connected to such another computing system 760 by means of a local area network (LAN) or a wide area network (WAN), such as for example the internet, in which case the other computing system may for example comprise a suitable web server. Storage element interface 706 may comprise a storage interface such as for example a Serial Advanced Technology Attachment (SATA) interface or a Small Computer System Interface (SCSI) for connecting bus 410 to one or more storage elements 708, such as one or more local disks, for example 1 TB SATA disk drives, and control the reading and writing of data to and/or from these storage elements 708. Although the storage elements 708 above is described as a local disk, in general any other suitable computer-readable media such as a removable magnetic disk, optical storage media such as a CD or DVD, -ROM disk, solid state drives, flash memory cards, ... could be used.

The steps executed in the method for traffic mirroring according to the present invention, illustrated by the above embodiments, may be implemented as programming instructions stored in local memory 704 of the computing system 700 for execution by its processor 702. Alternatively the instructions may be stored on the storage element 708 or be accessible from another computing system through the communication interface 712.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A network element (101; 201; 611) of a data packet network (100), said network element (101; 201; 611) comprising a traffic mirroring filter (112) configured to filter data packets and to forward data packets that match said traffic mirroring filter (112) to an analysing network element (103; 621), said network element (101; 201; 611) further comprising:
a data packet tagging module (113) adapted to tag a data packet that matches said traffic mirroring filter (112) with a mirroring tag and to forward said data packet without duplication to thereby postpone duplication of said data packet to a packet forwarding network element (615) located at a point in the network where a trajectory of said data packet to its destination (102; 603) and a trajectory of said data packet to said analysing network element (103; 621) diverge.

2. A network element (101; 201; 611) according to claim 1 wherein said mirroring tag comprises one or more of:
- a Virtual Local Area Network tag or VLAN tag;
- manipulated Ethernet Type of Service bits or TOS bits;
- a manipulated Internet Protocol Differentiated Services Code Point value or IP DSCP value; and/or
- a dedicated packet header.

3. A packet forwarding network element (201; 614, 615) adapted to receive and forward data packets in a data packet network (100), said packet forwarding network element (201; 614, 615) comprising:
- a mirroring tag recognition module (212) adapted to recognize a mirroring tag in a received data packet, said mirroring tag indicating that a copy of said data packet must be forwarded to an analysing network element (103; 621); and
- a packet forwarding module (213) adapted to forward said data packet with mirroring tag once if an output port of said packet forwarding network element (614) towards a destination (603) of said data packet is identical to an output port of said packet forwarding network element (614) towards said analysing network element (621).

4. A packet forwarding network element (201; 614, 615) according to claim 3, wherein said packet forwarding module (213) is further adapted to remove said mirroring tag from said data packet if the output port of said packet forwarding network element (615) towards said destination (603) is different from the output port of said packet forwarding network element (615) towards said analysing network element (621), to duplicate said data packet and forward a duplicate towards said analysing network element (621), and to forward said data packet towards said destination (603) in absence of any drop decision.

5. A packet forwarding network element (201; 614, 615) according to claim 4, wherein said packet forwarding module (213) further encapsulates said data packet before forwarding said data packet towards said destination (603), and/or encapsulates said duplicate before forwarding said duplicate towards said analysing network element (621).

6. A packet forwarding network element (201; 614, 615) according to claim 4, wherein said packet forwarding module (213) is further adapted to drop said data packet without forwarding said data packet towards said destination (102; 603) in case of a drop decision.

7. A method for traffic mirroring at a network element (101; 201; 611), said method comprising:
- filtering data packets that match a traffic mirroring filter (112) at said network element (101; 201; 611);
- tagging a data packet that matches said traffic mirroring filter (112) with a mirroring tag; and
- forwarding said data packet without duplication to thereby postpone duplication of said data packet to a packet forwarding network element (201; 615) located at a point in the network where a trajectory of said data packet to its destination (102; 603) and a trajectory of said data packet to said analysing network element (103; 621) diverge.

8. A method for traffic mirroring at a packet forwarding network element (201; 614, 615), said method comprising:
- recognizing (401) a mirroring tag in a received data packet, said mirroring tag indicating that a copy of said data packet must be forwarded to an analysing network element (103; 621); and
- forwarding (404) said data packet with mirroring tag once if an output port of said packet forwarding network element (614) towards a destination (603) of said data packet is identical to an output port of said packet forwarding network element (614) towards said analysing network element (621); or
- removing (405) said mirroring tag from said data packet if the output port of said packet forwarding network element (615) towards said destination (603) is different from the output port of said packet forwarding network element (615) towards said analysing network element (621), to duplicate (406) said data packet and forward (407) a duplicate towards said analysing network element (621), and to forward (407) said data packet towards said destination (603) in absence of any drop decision.
